# EUROPEAN PATENT SPECIFICATION

(11) **EP 0 673 292 B1**
(45) Date of publication and mention of the grant of the patent: **21.08.2002**
(21) Application number: 94906427.3
(22) Date of filing: 04.11.1993
(51) Int. Cl.: B22F 1/00, B32B 15/00, B23K 35/02

(54) **METHOD OF REPAIRING THE SURFACE OF A SUPERALLOY PART**
VERFAHREN ZUR REPARATUR DER OBERFLÄCHE EINES TEILS AUS EINER SUPERLEGIERUNG
PROCEDE DE REPARATION DE LA SURFACE D'UNE PIECE EN SUPERALLIAGE

(30) Priority: 04.11.1992 US 970692; 17.02.1993 US 18866
(43) Date of publication of application: 27.09.1995
(73) Proprietor: COATING APPLICATIONS, INC., Cincinnati, OH 45215 (US)
(72) Inventor: RAFFERTY, Kevin, Harrison, OH 45030 (US); ROWE, Bruce, Cincinnati, OH 45206 (US)
(74) Representative: Findlay, Alice Rosemary
(86) International application number: PCT/US93/10684
(87) International publication number: WO 94/011139

(56) References cited:
- GB-A- 1 017 650
- GB-A- 2 135 698
- GB-A- 2 240 504
- US-A- 3 743 556
- US-A- 4 194 040
- US-A- 4 228 214

## Description

### Background of the Invention

Metal parts, for example, those used in jet engines are generally required to meet very precise tolerances. Damage to metal parts during use or during machining where a part is overmachined can prevent the part from falling within the set tolerances and require that the part be repaired or replaced. To repair such damage, new metal must be brazed to the surface of the part.

The new metal needs to have a composition similar to the base metal. Thus, diffusion braze fillers are combined with powder base metal to provide a composition which brazes to the base metal at a temperature lower than the melting point or softening point of the base metal.

Typically, this was done by forming a slurry which includes the powdered base metal, powdered diffusion braze filler and a binder which could be, for example, a methacrylate binder, an alginate binder or the like. These systems provide acceptable results. However, well defined geometries needed for some repairs were very difficult to obtain.

Further, slurries such as these are difficult to use. The binder system must be initially mixed. Then the precise amount of base metal and diffusion filler must be combined. This has a very limited shelf life. It cannot be mass produced for sale and subsequent use. It must be prepared by the actual user which creates the potential problem of human error.

Also, the boron typically used in the braze alloy could localize or puddle on the surface of the part. This weakens the base metal and can destroy the part. Slurries are also difficult to conform, resulting in poor ability for large build-up repairs.

Also, with oxygen sensitive alloys such as those that include titanium, aluminum, hafnium, and chromium, heating above 800°F (426.67°C) can cause oxide formation. These oxides are not normally reducible in brazing furnaces. Most braze furnaces are designed to either operate in the vacuum or in a hydrogen atmosphere. However, there is frequently a trace amount of oxygen remaining in the furnace that can react with these metals. To avoid this problem, such alloys containing these oxygen sensitive metals are nickel coated prior to base metal repair. This nickel precoating is undesirable simply because it requires an extra step or even two extra steps frequently requiring masking of portions that are not to be nickel coated.

US Patent 4194040 discloses a method of forming an article comprising heating a composition containing about 1 to 15% by volume of PTFE and about 85 to 99% by volume of particulate metals, intermetallic compounds, ceramics, plastics or combinations thereof. The heating may be such as to sinter the particulate material. Amongst the examples there is described the formation of an iron-nickel sheet and a nickel braze sheet using the process and then lamination of the two sheets.

It is an object of the present invention to provide a superalloy repair method which does not involve use of a slurry and which does not require nickel precoating.

Further, it is an object of the present invention to provide such a superalloy repair method which provides precise dimensional repairs.
The present invention provides a method of repairing the surface of a superalloy part with a composite tape having at least a first braze alloy layer comprising braze alloy powder held together by a binder, the binder being polytetrafluoroethylene, and a second superalloy layer bonded to the first layer, the second layer comprising superalloy powder held together by a binder, the binder being polytetrafluorethylene, the method comprising placing the first layer on the surface of the part and heating the part to a temperature effective to evaporate the binder and braze the superalloy powder to the surface.

The repair tape is preferably a plural layered tape. At least one inner layer is formed from a superalloy bonded together by a PTFE binder such as fibrillated polytetrafluoroethylene. At least two layers are diffusion braze alloy also bonded together by a PTFE binder such as fibrillated polytetrafluoroethylene. The outer layers sandwich the inner layer. These layers are bonded together and can be placed directly on the repair area as a tape. During the thermal repair cycle, the diffusion braze alloy would melt and infiltrate the superalloy tape from both sides providing a repair which would essentially keep its dimensional integrity as well as have a greater per volume density of basis metal.

Where geometries are complex, stresses placed on the tape during repair can cause the tape to lift away from the repair surface during the thermal processing. However using a three layered tape with a diffusion layer contacting the repair surface enhances wetability and reduces the possibility of tape movement. This lower layer is preferably maintained relatively thin to prevent damage to the repair surface. Since this lower layer is thin, there is little likelihood that boron will damage the base metal.

This tape provides a cleaning ability to repair surface as well as the superalloy particles themselves. This can be extremely important where the superalloy and the superalloy powder of the repair contain high levels of aluminum and titanium which are potential oxide formers and potentially a threat to the success of the repair.

Further, the tape's cleaning ability reduces or eliminates the need for nickel plating over the part in the repair area due to the enhanced brazability.

Further, the resulting braze metal powder structure is enhanced by the separation of the superalloy powder and the diffusion metal powder. This is because using the current method, the distance between the superalloy powder particles is reduced due to the separation of the components in the multi-layer tape. This creates a repair of more nearly part-like mechanical properties because of the higher base metal content per unit volume.

By holding at brazing temperature or slightly below for an extended period of time (e.g., 2 hours), the softening or melting point of the repair can approach the softening or melting point of the superalloy resulting in a higher quality repair, more closely approaching superalloy, properties.

The reason for the improvement stems from the outward diffusion of melting point suppressant away from the repair area, significantly reducing its concentration in the repair, and slightly raising it in the surrounding base metal.

Further, the flexible and pliable nature of the tape allows repairs of complex geometries to be easily addressed and promotes the easy manufacture of preforms for repairing multiple identical parts. Finally, after the polytetrafluoroethylene resin has been evacuated, the superalloy tape geometry structure remains intact providing for near drawing dimensioned preforms reducing timely and costly machining of the repair area after repair thermal cycle.

In one embodiment of the present invention, the repair can be carried out with a tape formed with multiple alternating layers of superalloy and diffusion braze alloy forming a tape which is greater than one-half inch (1.27 cm) thick. This can be cut to size to form intricate parts which can be machined to size and used.

These advantages of the present invention as well as others will be appreciated further in light of the following detailed description and drawings in which:

### Brief Description of the Drawings

Fig. 1 is a cross-sectional view of a tape for use in the present invention; and
Fig. 2 is a cross-sectional view of an alternate tape for use in the present invention,

### Detailed Description

The present invention concerns the use of a laminated tape 11 for repair of hard superalloy surfaces 12, using a brazing technique. Superalloy surfaces include, of course, all forms of nickel, cobalt, titanium, and tungsten based superalloys such as Rene 35, Rene 41, Rene 77, Rene 80, Rene 80H, Rene 95, Rene 125, Rene 142, Inconel 1606, Inconel 625, Inconel 713, Inconel 718, Hastelloy X, Wasp alloy, Haynes 188, L605, X-40, MarM-509, and MarM-247.

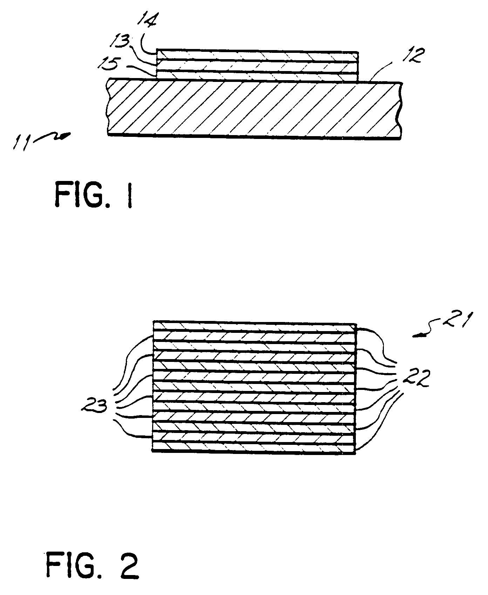

As shown in Fig. 1, the laminate tape 11 is a three layered tape structure. The intermediate layer 13 is a mixture of the superalloy powder and a binder. The outer two layers 14 and 15 are a mixture of diffusion braze alloy and binder.

The binder is fibrillated PTFE. The fibrillated PTFE polymer used in the process of this invention is a high molecular weight PTFE resin produced by emulsion polymerization. These PTFE polymers have a broad molecular weight range of about 10-20 million and are commercially available products. Preparation of these polymers, which is described in U.S. Patent 2,510,112, U.S. Patent 2,587,357, and U.S. Patent 2,685,707, involves well known emulsion polymerization techniques wherein tetrafluoroethylene under pressure and water containing an emulsifying agent is reacted with a water soluble free radical catalyst. The emulsion produced is coagulated, washed and then dried. The average particle size of the polymer is about 50-560 micrometers. Polymer having larger or smaller average particle size is operative.

The PTFE used to make the composition is commercially available from E.I. DuPont and Company, Wilmington, Delaware sold under the trade designation Teflon®6C. Each layer will have from .25 to about 25% of the fibrillated PTFE and preferably 1 to about 15% by weight. The preferred composition includes 3% PTFE by weight.

The second component of the intermediate layer 13 is the powdered superalloy itself which will make up the remainder of the composition. Microstructural improvements can be observed in the superalloy powder layer of the suggested multi-layer tape through the use of defined powder sizes. Densification of superalloy powder is achieved by having a particle size distribution such that the interstitial spaces between the larger particles are filled with smaller particles. Voided spaces to be filled by the diffusion alloy layer upon infiltration are minimized creating a repair area closer to superalloy chemistry with a corresponding increase in desirable properties, for example, fatigue life. Also, while a theoretical distribution is desirable, a simple mixture of coarser powder, for example, -80 mesh to +180 mesh together with a finer powder, for example, -400 mesh, can significantly increase the superalloy layers density without the greatly added cost of an engineering grade of powder.

The outer layers 14 and 15 again are formed from two components, the binder, fibrillated polytetrafluoroethylene, and the diffusion braze alloy. A diffusion braze alloy is typically an alloy similar in composition to the superalloy with the addition of a melt suppressant or it can be simply a braze alloy. There are many known commercially available braze alloys. The makeup of several of these compositions are listed below:

| | | |
|---|---|---|
| 1. | Boron | 2.9 |
| | Nickel | 92.6 |
| | Tin | 4.5 |
| | | |
| 2. | Boron | 3.0 |
| | Chromium | 7.0 |
| | Iron | 3.0 |
| | Nickel | 83.0 |
| | Silicon | 4.0 |
| | | |
| 3. | Chromium | 19.0 |
| | Nickel | 17.0 |
| | Silicon | 10.0 |
| | | |
| 4. | Boron | 1.8 |
| | Nickel | 94.7 |
| | Silicon | 3.5 |
| | | |
| 5. | Boron | 0.8 |
| | Cobalt | Balance |
| | Chromium | 19.0 |
| | Nickel | 17.0 |
| | Silicon | 8.0 |
| | Tungsten | 4.0 |
| | | |
| 6. | Boron | 2.75 |
| | Chromium | 10.5 |
| | Nickel | 50.3 |
| | Palladium | 36.0 |
| | Silicon | 0.5 |

Such braze alloys can be purchased from companies such as Westgo, Praxair, and others.

To form the intermediate layer 13 using the binder, 1 to 6% of the fibrillated PTFE (Teflon®6C) is combined with 94 to 99% (by weight) of the ground superalloy in a ball mill or other low shear mixer such as a KD miller with kinetic dispersion or a vibratory mixer.

In a ball mill, the mixture is milled at about 200 rpm using 0.95 cm (3/8 inch) stainless steel balls. This is continued until the mixture changes from a powder to small agglomerated particles generally 10 to 40 minutes (25 minutes normally). If this is continued too long, a breakdown of the agglomeration occurs resulting in material unsuitable for tape product.

The mixture is then separated from the steel balls and rolled between adjustable rollers to a desired thickness. Specifically, the mixture is rolled between pressure rollers in a first direction, then the formed sheet is folded between pressure rollers in a first direction, then the formed sheet is folded and the folded sheet is rolled in a direction which is 90° from the axis of the first rolling step, i.e., cross rolled. Each rolling step decreases the thickness of the sheet. Preferably, the sheet is separated from the rollers by an aluminum foil separating sheet or other suitable material. This is continued until the desired thickness and consistency is obtained.

Likewise, the outer or diffusion braze alloy layers 14 and 15 are formed in the same manner as the layer 13 by combining 1 to 6% polytetrafluoroethylene with 99 to 94% diffusion braze alloy (by weight). This is then mixed in a ball mill separated from the steel shot and rolled to the desired dimension.

In use, the ratio of braze alloy to superalloy powder in the overall composite 11 should be from about .1 to 1.0 up to 1.0 to .1 with about 20% by weight of braze alloy and 80% superalloy powder preferred. Increasing the ratio of braze alloy will decrease the braze temperature but the repair will be weaker. Also excess braze alloy will result in too much flow reducing the ability of the repair to maintain its shape.

Generally, the three layers 13, 14, and 15 are each formed to a thickness of about 0.254 to 1.524 mm (0.01 to .06 inches) or thicker and then are placed together with the diffusion braze alloy layers 14 and 15 sandwiching the superalloy layer 13. These are passed together through rollers to reduce their overall thickness by about 50%. Thus, the final thickness of each layer will be about 1/2 the originally rolled thickness of the individual layers, i.e. 0.127 to 0.762 mm (.005 to .030") each. This can then be cut to the desired size for use. The thickness of the three layers along with the ratio of binder to superalloy or diffusion braze alloys in the layers will control the ratio of diffusion braze alloy to superalloy.

To use the composite 11, the damaged area of the surface 12 is covered with the repair tape with diffusion layer 15 against the surface 12. The tape may be held to the surface with an optional adhesive layer (not shown) such as Nicrobraze 200 or using a two sided adhesive tape purchased from 3M. The thickness of the layers is established to provide the amount of superalloy needed for the repair. The thickness of the superalloy layer will generally be 0.127 to 0.762 mm (.005 to .030") although this may change depending on the application. The thickness of the diffusing braze alloy layers should be 0.0635 to 0.381 mm (.0025 to .015").

The object is heated to a temperature of at least about 426.67°C (800°F.) to 1260°C (2300°F), which causes the binder to evaporate and the braze alloy to melt and infiltrate the superalloy powder from above and below. For most nickel and cobalt alloys, at least 954.4°C (1750°F), is required. The braze alloy will then, upon cooling. bond the superalloy powder to the metal surface.

By holding at brazing temperature or slightly below for an extended period of time, 30 minutes to 3 hours and preferably 2 hours, the softening or melting point of the repair can approach the softening or melting point of the superalloy, resulting in a higher quality repair, more closely approaching base metal properties.

The reason for the improvement stems from the outward diffusion of melting point suppressant away from the repair area, significantly reducing its concentration in the repair, and slightly raising it in the surrounding superalloy.

With alloys of titanium, aluminum, chromium, and hafnium, heating to a temperature above 426.67°C (800°F), causes oxide formation. With the present invention, the hydrogen fluoride generated as the tape is heated removes the oxides of these metals allowing a good braze joint without prior nickel plating. This will be further appreciated in light of the following example. Because microcrack cleaning is not required in this repair, the level of cleaning and reduced oxide formation from the structural tape itself is sufficient for an adequate repair.

Multiple layer tape 21 can be prepared as shown in Fig. 2. In this Fig. 2, the tape 21 has thirteen layers, seven layers 22 of the diffusion braze alloy and six layers 23 of the superalloy.

This composite tape again is made in the same manner as the tape shown in Fig. 1. The individual layers formed from the same proportions of superalloy or diffusion braze alloy are combined with the fibrillated polytetrafluoroethylene and processed as previously described. The individual layers are combined together by running them through a press. With multiple layered tapes, the individual layers can be bonded together all at once or alternately can be combined two or four layers at a time from the middle portion towards the outer portion. This will compensate for the pressure differential which will be mainly felt on the exterior of the composite 21 as it passes through rollers.

The composite tape 21 with extended thickness shown in Fig. 2 provides a repair tape for parts or details of parts or assemblies. For example, sheet metal type parts can be readily repaired using the multi-layered system by cutting a preform of the desired part from the tape 21 and processing the preform through an appropriate thermocycle. This method could be extremely beneficial where a part has an intricate geometry, but can be easily cut from a sheet of tape as opposed to a complex and costly machining process.

As an example, the outer bands of jet engine nozzle assemblies which are about 6.35 mm (.25 inches) thick can be repaired by producing a composite tape preformed with Rene 80 powder and PTFE as the upper layer and a second layer of General Electric braze alloy, D15, bonded together by PTFE. In this embodiment, the base metal layer could be, for example, 6.35 mm (0.25 inches) thick and the upper layer 1.60 mm (0.063 inches) thick. This would be formed into the shape of the finished band with some allowance for shrinkage, placed on ceramic blocks which have been machined to the outer band radius of the actual parts and subjected to a thermal cycle. If a thicker part were required, multiple layers of the base metal and diffusion alloy can be conbined to form the tape.

Accordingly, the present invention provides the ability to provide large base metal repairs on superalloys. It also is specifically beneficial for making base metal repair on superalloys where the surface being repaired has a complex geometry.

A further advantage of the present invention is that it at least partially separates the braze alloy from the surface of the article being repaired. Although a thin layer of the braze alloy may contact the surface, the majority of the braze alloy is separated from the part surface. The braze alloy itself can act to weaken the surface of the metal part.

## Claims

1. A method of repairing the surface of a superalloy part with a composite tape having at least a first braze alloy layer comprising braze alloy powder held together by a binder, the binder being polytetrafluoroethylene, and a second superalloy layer bonded to the first layer, the second layer comprising superalloy powder held together by a binder, the binder being polytetrafluoroethylene, the method comprising placing the first layer on the surface of the part and heating the part to a temperature effective to evaporate the binder and braze the superalloy powder to the surface.

2. A method as claimed in Claim 1 further comprising maintaining the part at the temperature for a period of 30 minutes to 3 hours.

3. A method as claimed in Claim 1 or Claim 2 comprising brazing the tape to the base metal surface in a non-oxidizing environment like hydrogen or a vacuum.

4. A method as claimed in any preceding claim wherein the tape is formed from plural superalloy layers alternating with plural braze alloy layers.

5. A method as claimed in any one of Claims 1 to 3 wherein the base metal layer is sandwiched between two braze alloy layers.

6. A method as claimed in any preceding claim wherein the binder is fibrillated polytetrafluoroethylene.

7. A method as claimed in Claim 6 wherein the first layer comprises from about 1 to about 6% fibrillated polytetrafluoroethylene and the second layer contains from about 1 to about 6% fibrillated polytetrafluoroethylene.

8. A method as claimed in any preceding claim wherein the ratio of base metal powder to braze alloy is from 0.1:1 to 1:0.1 by weight.

## Patentansprüche

1. Verfahren zum Reparieren der Oberfläche eines superlegierten Teils mit einem Verbundstoffband, das wenigstens eine erste Hartlotlegierungsschicht hat, die ein von einem Bindemittel zusammen gehaltenes Hartlotlegierungspulver umfasst, wobei das Bindemittel Polytetrafluorethylen ist, und eine auf die erste Schicht gebondete zweite Superlegierungsschicht, wobei die zweite Schicht von einem Bindemittel zusammen gehaltenes Superlegierungspulver umfasst, wobei das Bindemittel Polytetrafluoretyhlen ist, wobei das Verfahren das Aufbringen der ersten Schicht auf die Oberfläche des Teils und das Erhitzen des Teils auf eine Temperatur umfasst, die bewirkt, dass das Bindemittel verdunstet und das Superlegierungspulver auf die Oberfläche hartgelötet wird.

2. Verfahren nach Anspruch 1, ferner umfassend das Halten des Teils auf der Temperatur für eine Dauer von 30 Minuten bis 3 Stunden.

3. Verfahren nach Anspruch 1 oder Anspruch 2, umfassend das Hartlöten des Bandes auf die Basismetalloberfläche in einer nichtoxidierenden Umgebung wie Wasserstoff oder Vakuum.

4. Verfahren nach einem der vorherigen Ansprüche, bei dem das Band aus mehreren Superlegierungsschichten gebildet ist, die sich mit mehreren Hartlotlegierungsschichten abwechseln.

5. Verfahren nach einem der Ansprüche 1 bis 3, bei dem die Basismetallschicht zwischen zwei Hartlotlegierungsschichten eingeschlossen ist.

6. Verfahren nach einem der vorherigen Ansprüche, bei dem das Bindemittel fibrilliertes Polytetrafluorethylen ist.

7. Verfahren nach Anspruch 6, bei dem die erste Schicht etwa 1 bis etwa 6% fibrilliertes Polytetrafluorethylen und die zweite Schicht etwa 1 bis etwa 6% fibrilliertes Polytetrafluorethylen enthält.

8. Verfahren nach einem der vorherigen Ansprüche, bei dem das Gewichtsverhältnis zwischen Basismetallpulver und Hartlotlegierung zwischen 0,1:1 und 1:0,1 liegt.

## Revendications

1. Méthode de réparation de la surface d'une pièce de superalliage par une bande composite ayant au moins une première couche d'alliage de brasage comprenant un alliage de brasage en poudre maintenu ensemble par un liant, le liant étant du polytétrafluoroéthylène, et une deuxième couche de superalliage liée à la première couche, la deuxième couche comprenant du superalliage en poudre maintenu ensemble par un liant, le liant étant du polytétrafluoroéthylène, la méthode comprenant la mise en place de la première couche à la surface de la pièce et le chauffage de la pièce à une température efficace pour évaporer le liant et braser le superalliage en poudre à la surface.

2. Méthode selon la revendication 1, comprenant en outre le maintien de la pièce en température pour une durée de 30 minutes à 3 heures.

3. Méthode selon la revendication 1 ou la revendication 2, comprenant le brasage de la bande à la surface métallique de base dans un environnement non oxydant, tel que dans l'hydrogène ou sous vide.

4. Méthode selon l'une quelconque des revendications précédentes, dans laquelle la bande est formée à partir d'une pluralité de couches de superalliage alternant avec une pluralité de couches d'alliage de brasage.

5. Méthode selon l'une quelconque des revendications 1 à 3, dans laquelle la couche métallique de base est prise en sandwich entre deux couches d'alliage de brasage.

6. Méthode selon l'une quelconque des revendications précédentes, dans laquelle le liant est du polytétrafluoroéthylène fibrillé.

7. Méthode selon la revendication 6, dans laquelle la première couche comprend d'environ 1 à environ 6% de polytétrafluoroéthylène fibrillé et la deuxième couche comprend d'environ 1 à environ 6% de polytétrafluoroéthylène fibrillé.

8. Méthode selon l'une quelconque des revendications précédentes, dans laquelle le rapport du métal de base en poudre à l'alliage de brasage est de 0,1:1 à 1:0,1 en poids.
